# EUROPEAN PATENT APPLICATION

(11) **EP 2 354 596 A1**
(43) Date of publication of application: **10.08.2011**
(21) Application number: 09824702.6
(22) Date of filing: 14.10.2009
(51) Int. Cl.: F16H 25/20, F16D 41/08

(54) **LINEAR ACTUATOR**

(30) Priority: 05.11.2008 JP 2008283835
(71) Applicant: Hitachi Construction Machinery Co., Ltd, Tokyo 112-8563 (JP)
(72) Inventor: HAYAS,E Isao, Hitachinaka-shi Ibaraki 312-0034 (JP); HIRAKU, Kenji, Hitachinaka-shi Ibaraki 312-0034 (JP); YAMASAKI, Masaru, Hitachinaka-shi Ibaraki 312-0034 (JP); OCHIAI, Masami, Tokyo 112-8563 (JP)
(74) Representative: Beetz & Partner
(86) International application number: PCT/JP2009/067815
(87) International publication number: WO 2010/053002

(57) **Abstract**

In a method for utilizing a wedge engagement mechanism as means for retaining an output shaft without requiring a large driving power, there is a need for preventing fatigue life of an actuator from being reduced as a result of stress at contacting portions of parts of wedge engagement portions of the wedge engagement mechanism becoming large.

In a linear actuator that converts rotary motion of a drive unit for rotation to linear motion through a rotary motion-to-linear motion conversion mechanism, a one-way mechanism is disposed upstream of the rotary motion-to-linear motion conversion mechanism in a rotational drive path, to thereby inhibit, with a small wedge engagement force, the output shaft from being driven by an external force, achieving reduction in the stress at the contacting portions.

## Description

### Technical Field

The present invention relates, in general, to linear actuators that translate rotary motion of a rotation drive source, such as a motor, to linear motion, thereby driving an object linearly. More specifically, the present invention relates to a linear actuator suitable for use in cases where a loading direction remains constant, as in a gravitational force of a load in a lifting apparatus, or where part of work done by an actuator to oppose to the load and move the object is stored in the form of positional energy or elastic energy of a spring.

### Background Art

As part of efforts made against environmental problems and global warming, there is a growing trend in recent years in actuators used in various types of devices towards electrically driven actuators, instead of known hydraulic actuators. While not using hydraulic fluids required for hydraulic devices directly leads to a measure against environmental problems, the trend aims for, for example, reduction in driving power consumption by making use of regeneration of the driving power that is made easy through the use of electric drive and in local environmental load at an actuator operating site involved in converting an energy source from fuel of internal combustion engines to electric power, and an effective use of energy in wider areas through the use of midnight electric power via batteries.

Use of the electric power for driving the actuator, however, poses new technical problems and solving these problems is a challenge to be responded to when the hydraulic actuators are changed to the electrically driven actuators.

Assume, for example, a case in a hydraulic linear motion actuator, such as a hydraulic cylinder, in which an object to be driven is to be held at a current position with a load therefrom acting. Retaining is in this case enabled without consuming any other form of driving power by cutting off paths to supply and discharge hydraulic pressure using valves to thereby contain the hydraulic fluid in an enclosed space. With the electrically driven actuator, by contrast, a motor as a drive source is required to generate torque with which to balance the load acting externally. Specifically, part or all of the effect of reduced driving power consumption produced as a result of the change to the electrically driven actuator is lost. In addition, for example, a motor coil temperature increased during the retaining may impair durability of the device.

As an example of a technique for solving the problems of the retaining driving power and motor durability, a mechanism is disclosed that is able only to linearly drive an output shaft from a rotation drive source side, such as a motor, and not able to linearly drive the output shaft with a thrust load acting on the output shaft, as disclosed in JP-A-2007-32708 "Electric linear motion actuator".

### Prior Art References

### Patent Document

Patent Document 1: JP-2007-32708-A

### Summary of the Invention

### Problems to be Solved by the Invention

The linear actuator mechanism disclosed in Patent Document 1 has indeed the effects of eliminating the need for retaining driving power and improving motor durability; however, the mechanism fails to solve such problems as durability of the mechanism itself and adaptability to regeneration of the driving power that assumes one of the most important purposes of implementing the electrically driven actuator. Specifically, an arrangement is yet to be established of an electrically driven linear actuator that can make the most out of advantages of implementing the electrically driven actuator and that is highly practical.

The linear actuator disclosed in Patent Document 1 incorporates an arrangement in which a wedge member makes wedge engagement between the output shaft and an axially fixed member in order to retain the linear motion output shaft at a current position with load acting from the object to be driven.

The linear actuator typically uses a rotary motion-to-linear motion conversion mechanism to generate linear motion from rotation of a motor as a drive source and, at the same time, produces a large thrust force by making a speed of the linear motion small. The thrust force is made large because a large load, such as driving resistance, acts from the object to be driven.

In the linear actuator disclosed in Patent Document 1, the large load is supported directly by the wedge engagement portion, so that the large load acts on contact portions between parts of the wedge engagement mechanism, resulting in large stress values of the contact portions. In addition, a ball is used for a rolling element that serves as the wedge member in the linear actuator disclosed in Patent Document 1. The ball contacts other parts at a small area approximating a point, which contributes to an even greater stress value of the contact portion.

The greater stress value of the contact portion of wedge engagement resulting from the foregoing factors helps shorten a flaking life from material fatigue of the members concerned, thus degrading durability of the actuator.

An object of the present invention is to achieve a highly durable electrically driven actuator requiring a small retaining driving power by reducing a stress value generated at a wedge engagement portion.

Additionally, according to the arrangement of the linear actuator disclosed in Patent Document 1, even when an attempt is made to rotatably drive the motor as the rotation drive source by linearly moving the output shaft, the wedge engagement invariably brings the output shaft to a stop in the linear motion through wedge engagement. Specifically, even with energy stored in the object to be driven, the stored energy cannot be used to turn the motor backward as a generator for regeneration of the driving power.

Another object of the present invention is to achieve an electrically driven actuator capable of regeneration of the driving power.

### Means for Solving the Problems

To solve the foregoing problems, aspects of the present invention provide the following arrangements.

A first aspect of the present invention provides a linear actuator including a rotary member in a rotational drive path, a drive unit for rotatably driving the rotary member, a linear motion member and a rotary motion-to-linear motion conversion mechanism for converting rotary motion of the rotary member to linear motion of the linear motion member, thereby allowing the linear motion to perform work relative to externals, the linear actuator comprising: a one-way mechanism for allowing the rotary member in the rotational drive path to rotate in a rotating driving direction relative to a non-rotary member and inhibiting, by wedge engagement, the rotary member from rotating in a direction opposite to the rotating driving direction (a backward direction). In the linear actuator, the one-way mechanism has a function of switching to a state in which the rotary member is allowed to rotate also in the opposite direction.

In a second aspect of the present invention, the one-way mechanism in the linear actuator according to the first aspect of the present invention comprises: an outer peripheral surface of one of the rotary member and the non-rotary member; an inner peripheral surface of the other of the rotary member and the non-rotary member, the outer peripheral surface and the inner peripheral surface forming a clearance distribution therebetween, the clearance distribution decreasing toward one side in a circumferential direction; a wedge member in a form of a rolling element disposed in the clearance; and elastic means for urging the wedge member in the form of the rolling element in a direction of decreasing clearance. The one-way mechanism further includes a retaining member disposed circumferentially adjacent the wedge member; and drive means for driving the retaining member circumferentially by an external command, the wedge member being pushed out by the retaining member in a direction opposite to an urging direction of the elastic means to inhibit wedge engagement, thereby allowing the one-way mechanism to establish a state in which the rotary member is allowed to rotate in the opposite direction.

In a third aspect of the present invention, in the linear actuator according to the first or second aspect of the present invention, the one-way mechanism establishes a state in which, when a driving power is not actively and externally supplied, the rotary member is inhibited from rotating in a direction opposite to the rotating driving direction relative to the non-rotary member and, when the driving power is actively and externally supplied, the rotary member is allowed to rotate also in the opposite direction.

In a fourth aspect of the present invention, in the linear actuator according to the first aspect of the present invention, if at least part of external work done by the linear motion of the linear motion member is energy stored in a form, for example, of positional energy or elastic energy, the rotary motion-to-linear motion conversion mechanism comprises a screw member having helical grooves and ridges, and a nut member connected to the screw member through a screw pair, the screw member and the nut member making a rolling contact, and regeneration of driving power is performed when the one-way mechanism allows the rotary member to rotate in the opposite direction.

In a fifth aspect of the present invention, in the linear actuator according to the second to fourth aspects of the present invention, the rotary member that is inhibited from rotating by the one-way mechanism through wedge engagement includes a portion having a diameter larger than those of other parts; the clearance distribution decreasing toward one side in the circumferential direction is formed between the portion and the non-rotary member; and the wedge member in the form of the rolling element is disposed in the clearance and urged by the elastic means in the direction of decreasing the clearance.

In a sixth aspect of the present invention, in the linear actuator according to the second to fourth aspects of the present invention, the rotary member that is inhibited from rotating by the one-way mechanism through wedge engagement has the highest rotating speed (angular velocity) in the rotational drive path.

In a seventh aspect of the present invention, in the linear actuator according to the first to second aspects of the present invention, the linear actuator further comprises a plurality of wedge engagement mechanisms having the wedge members in the form of the rolling elements, disposed in the circumferential direction, wherein the plurality of wedge engagement mechanisms is capable of translational motion in a plane perpendicular to an axis of the non-rotary member in the one-way mechanism, but constrained from rotation about the axis.

In an eighth aspect of the present invention, in the linear actuator according to the fourth aspect of the present invention, when the one-way mechanism allows the rotary member to rotate in the opposite direction for regeneration of driving power, a state is temporarily established in which the drive unit for rotation generates rotation drive torque, the state is then switched to one in which the one-way mechanism allows the rotary member to rotate in the opposite direction, and the rotation drive torque of the drive unit for rotation is thereafter reduced to start the regeneration of the driving power.

In the first aspect of the present invention, a supporting force required to retain the output shaft at the current position is generated by the wedge engagement of the one-way mechanism, which reduces the retaining driving force. In addition, the wedge engagement is made in the rotational drive path in which acting torque is relatively small, instead of the linear motion member on which a large thrust force acts. Contacting forces among different parts of the wedge engagement can therefore be reduced to thereby reduce stress generated at the contacting portions. Additionally, a cylindrical roller may be used as the rolling element as the wedge member in the one-way mechanism of the rotational drive path, so that line contact can be achieved among the contacting portions of the parts of the wedge engagement for even further reduced stress at the contacting portions. This improves durability.

The state in which the rotary member is allowed to rotate also in the opposite direction enables regeneration of the driving power by rotatably driving the motor as a generator through the linear motion on the output shaft side.

The second aspect of the present invention presents a specific arrangement for achieving the wedge engagement of the one-way mechanism, and a specific arrangement for inhibiting the wedge engagement and thereby enabling the opposite rotation of the rotary member.

In the third aspect of the present invention, even when an external driving power is shut down, or a drive source for allowing the rotary member to rotate in the opposite direction by the driving power fails, the one-way mechanism of the actuator maintains a function of inhibiting the rotary member from rotating in the opposite direction. The linear motion output shaft is thereby prevented from being moved by an externally acting load to ensure safety.

In the fourth aspect of the present invention, relatively moving parts of the rotary motion-to-linear motion conversion mechanism are in rolling contact with each other. This significantly reduces a coefficient of friction as compared with sliding contact and improves mechanical efficiency during conversion from the linear motion to rotary motion, in particular, in addition to conversion from the rotary motion to linear motion. This achieves a quantity of driving power recovered that justifies performance of regeneration of the driving power.

In the fifth aspect of the present invention, even with the load acting externally on the linear motion output shaft remaining unchanged, so that torque to be retained by the one-way mechanism in the rotational drive path remains unchanged, the torque may be generated through a wedge engagement force in the portion having even the larger diameter. Specifically, the wedge engagement force can be reduced by using the portion having the even larger diameter for the rotary member of the one-way mechanism, so that the stress at the contacting portions can be reduced and durability can be improved.

In the sixth aspect of the present invention, the torque to be retained by the one-way mechanism in the rotational drive path can be reduced even with the load acting externally on the linear motion output shaft remaining unchanged as follows. Even if the speed is changed through, for example, gears midway in the rotational drive path, the driving power transmitted at each of rotating speed portions can be regarded as substantially constant without change if a friction loss in speed change sections is sufficiently small and negligible. Torque acting on each of the rotating speed portions can be obtained by dividing the constant driving power by an angular velocity, so that the torque acting on the rotary member having the highest rotating speed is the smallest. Accordingly, stress generated at the wedge engagement portion becomes the smallest, resulting in improved durability.

In the seventh aspect of the present invention, the translational motion is enabled in the plane perpendicular to the axis, so that the non-rotary member automatically moves to a position at which the wedge engagement force in each of the wedge engagement mechanisms balances with each other. This action may be used to equalize the wedge engagement force in each of the wedge engagement mechanisms and, as a result, the wedge engagement force of part of the wedge engagement mechanisms can be prevented from becoming large. Accordingly, the stress generated at the wedge engagement portion also becomes the smallest, resulting in improved durability.

In the eighth aspect of the present invention, a significant reduction can be achieved in the friction resistance at the portion that must be driven when the one-way mechanism switches to the state in which the one-way mechanism allows the rotary member to rotate in the opposite direction for regeneration of the driving power. The switching operation, specifically, the regeneration of the driving power is substantially enabled.

### Effects of the Invention

The aspects of the present invention allow, in the linear actuator that performs work relative to externals through linear motion, the retaining driving power for retaining at a predetermined position the output shaft on which an external load acts to be reduced and the stress generated at the wedge engagement portion of component parts to be reduced to thereby improve durability. The aspects of the present invention also allow the driving power to be regenerated as may be necessary by an external command, achieving further saving in the driving power.

### Brief Description of the Drawings

Fig. 1 is a side cross-sectional view showing a general arrangement of a linear actuator according to an embodiment of the present invention.
Fig. 2 is a partial enlarged view showing section A in Fig. 1.
Fig. 3 is a cross-sectional view taken along line B-B of Fig. 2.
Fig. 4 is a cross-sectional view taken along line C-C of Fig. 2.
Fig. 5 is a cross-sectional view taken along line D-D of Fig. 2.
Figs. 6(a) and 6(b) are explanatory diagrams illustrating a condition in which a one-way mechanism in the embodiment is operative to prevent a drive unit for rotation from rotating backward.
Figs. 7(a) and 7(b) are explanatory diagrams illustrating a condition in which the one-way mechanism in the embodiment is inoperative to allow the drive unit for rotation to rotate backward.
Fig. 8 is a drawing illustrating an example to which the linear actuator shown in Fig. 1 is applied.

### Embodiment of the Invention

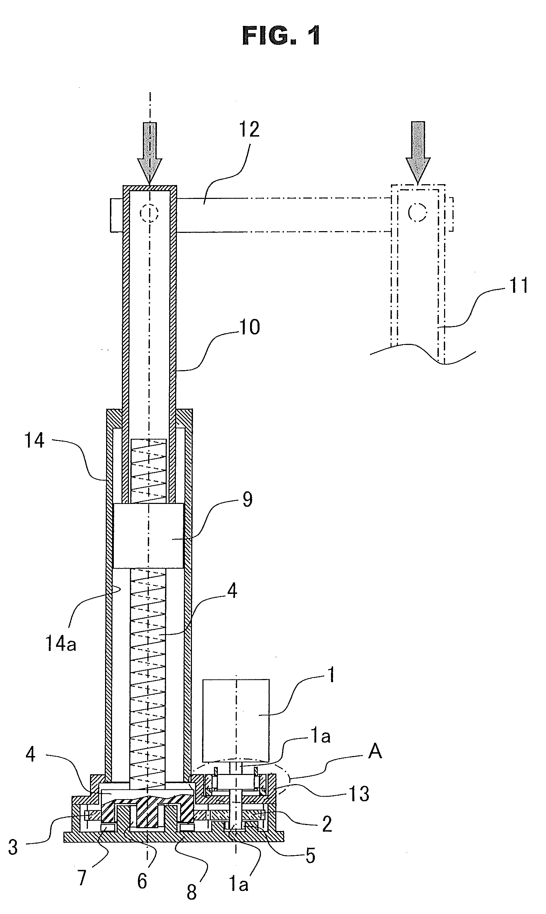

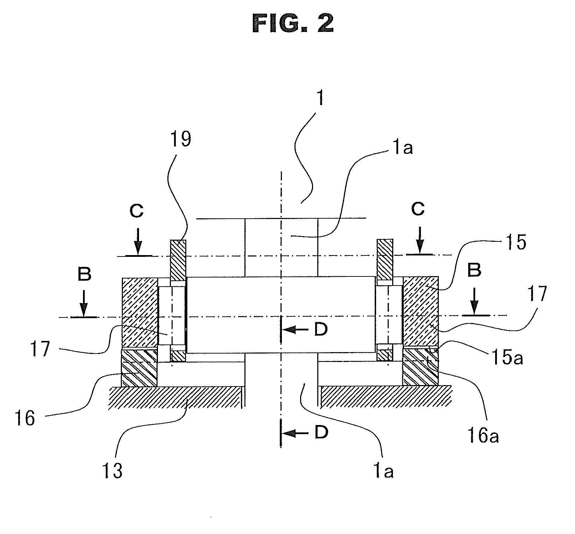

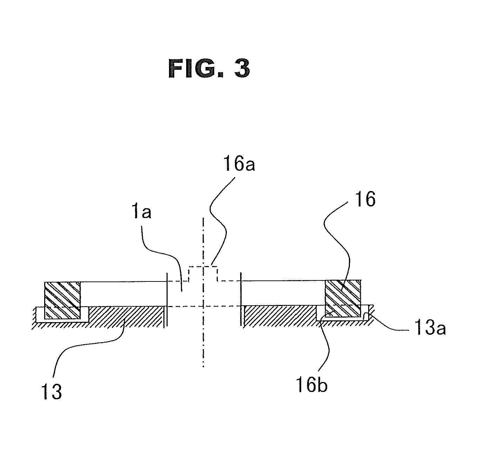

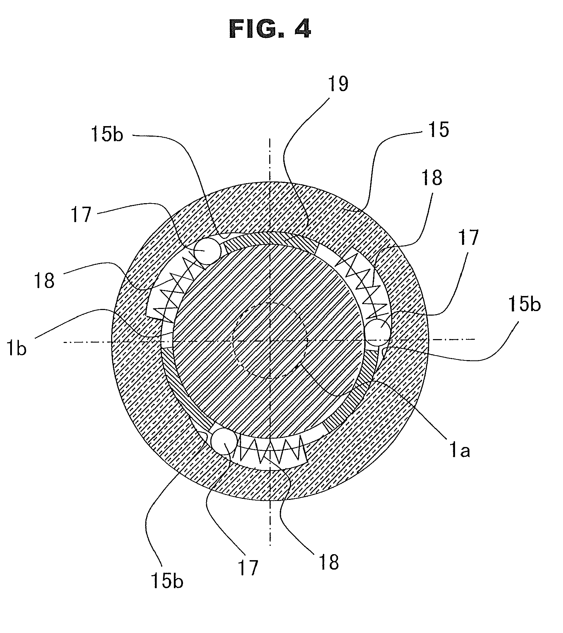

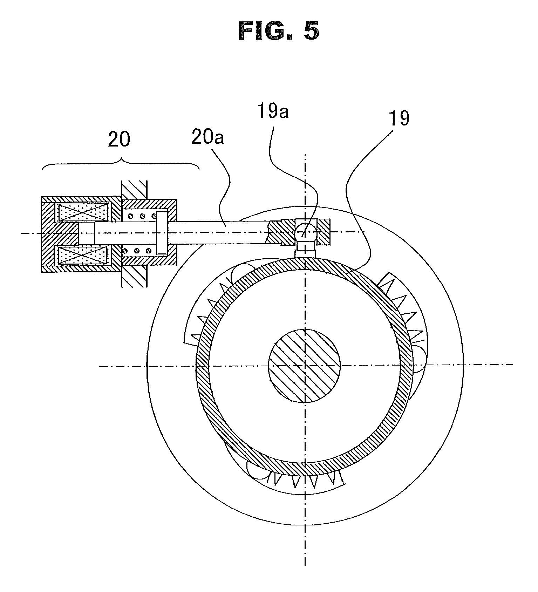

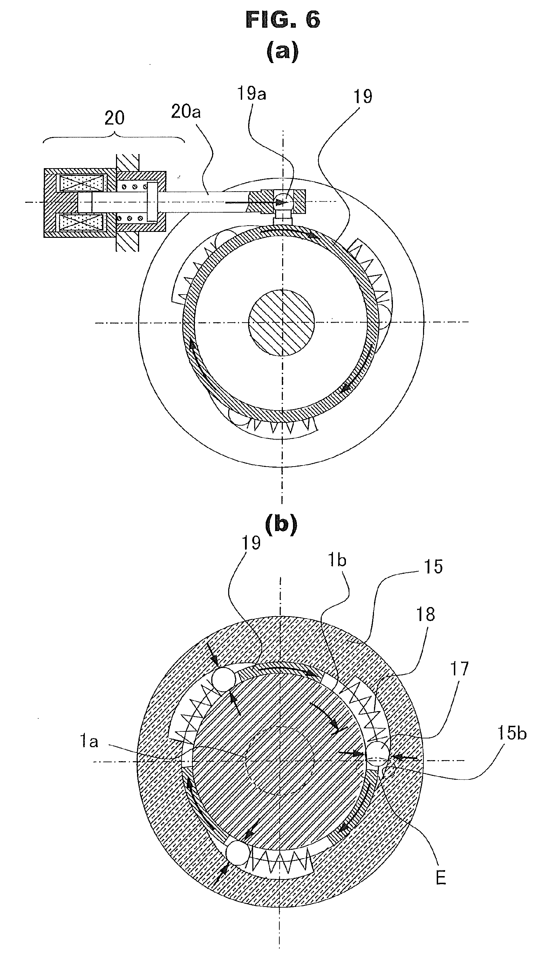

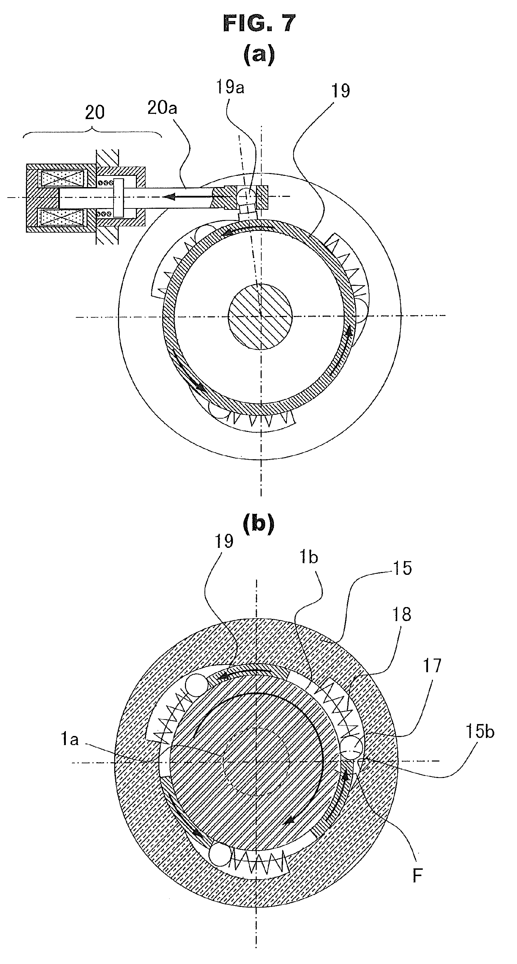

A linear actuator according to an embodiment of the present invention will be described below with reference to Figs. 1 through 7. Fig. 1 is a side cross-sectional view showing a general arrangement of the linear actuator according to the embodiment. Fig. 2 is a partial enlarged view showing section A in Fig. 1. Fig. 3 is a cross-sectional view taken along line B-B of Fig. 2. Fig. 4 is a cross-sectional view taken along line C-C of Fig. 2. Fig. 5 is a cross-sectional view taken along line D-D of Fig. 2. Figs. 6(a) and 6(b) are explanatory diagrams illustrating a condition in which a one-way mechanism in the embodiment is operative to prevent a drive unit for rotation from rotating backward, Figs. 6(a) and 6(b) being cross-sectional views taken along line D-D and line C-C, respectively, at that time. Figs. 7(a) and 7(b) are explanatory diagrams illustrating a condition in which the one-way mechanism in the embodiment is inoperative to allow the drive unit for rotation to rotate backward, Figs. 7(a) and 7(b) being cross-sectional views taken along line D-D and line C-C, respectively, at that time.

Referring to Fig. 1 showing the general arrangement of the linear actuator, a one-way mechanism of section A is assembled with, and a small gear 2 is then fixed to, an output shaft 1a of a motor 1 that serves as a drive unit for rotation. The small gear 2 meshes with a large gear 3 to which a screw shaft 4 is fixed. The small gear 2 is rotatably supported by a radial bearing 5 and the motor 1 bearing. An assembly of the large gear 3 and the screw shaft 4 is rotatably supported by a radial bearing 6 and has a reaction force relative to an actuator thrust force supported by a thrust bearing 7. The foregoing constitutes a rotational drive path. Each of the abovementioned bearings is assembled between a lower housing 8 as a fixed part and a corresponding rotary part of the rotational drive path.

The screw shaft 4 is mounted with a nut member 9 by a screw pair to form a screw mechanism, the two simultaneously accomplishing relative rotation and an axial movement. In this embodiment, the screw shaft 4 and the nut member 9 are in rolling contact with each other, resulting in a significantly small friction resistance therebetween as compared with sliding contact. Examples of screw mechanisms making the rolling contact include a ball screw mechanism disclosed in Patent Document 1 and a revolving roller mechanism disclosed in JP-2005-321043-A.

A linear motion output member 10 is fixed to the nut member 9. The linear motion output member 10 is hollow so as to avoid interference with the screw shaft 4. In this embodiment, the linear motion output member 10 is connected via a connecting member 12 to a linear motion output member 11 of another linear actuator shown by a dash-single-dot line in Fig. 1, so that the linear motion output member 10 integrated with the nut member 9 is constrained from rotation about respective central axes. Another possible arrangement that permits an axial movement of the linear motion output member 10 integrated with the nut member 9, while inhibiting the rotation about the central axes thereof, is to connect either one of the linear motion output member 10 and the nut member 9 to an upper housing 14 to be described later with a sliding key.

A center housing 13 is fixed on top of the lower housing 8 and, via the center housing 13, a cylindrical upper housing 14 is fixed. The upper housing 14 has an inner peripheral surface 14a for supporting the nut member 9 and the screw shaft 4 to thereby prevent the nut member 9 and the screw shaft 4 from tilting. The inner peripheral surface 14a, together with an outer peripheral surface of the linear motion output member 10, provides a sealing function, thereby preventing entry of, for example, dust into a screw pair portion achieved by the screw shaft 4 and the nut member 9. The one-way mechanism of section A mentioned earlier is assembled between the center housing 13 and the output shaft 1a of the motor 1.

A slope forming member 15 in the one-way mechanism of section A shown in Figs. 2 to 4 is a non-rotary member constrained via an Oldham ring 16 so as not to be rotatable relative to the center housing 13. A pair of keys 16a formed on a lower surface of the Oldham ring 16 is fitted into a pair of keyways 13a formed in the center housing 13. The Oldham ring 16 is movable relative to the center housing 13 only in a direction of the keyways. A pair of keys 16b formed on an upper surface of the Oldham ring 16 is fitted into a pair of keyways 15a formed in the slope forming member 15. The slope forming member 15 is movable relative to the Oldham ring 16 only in a direction of the keyways. As a result, the slope forming member 15 is capable of translational motion in a plane perpendicular to an axis of the center housing 13, but not rotary motion.

Referring to Fig. 4, the one-way mechanism generally includes: an outer peripheral cylindrical surface 1b that is part of a flange portion having a large diameter and fixed to the output shaft 1a of the motor 1; a slope surface 15b that is disposed on an inner periphery of the slope forming member 15 and inclined circumferentially in one direction; a roller 17 that serves as a rolling element and is assembled into a space between the outer peripheral cylindrical surface 1b and the slope surface 15b; and an urging spring 18 that urges the roller 17 in a clockwise direction in which a clearance between the outer peripheral cylindrical surface 1b and the slope surface 15b decreases.

In this embodiment, each of the slope surface 15b, the roller 17, and the urging spring 18 comprises three of each, disposed circumferentially at an angular pitch of 120 degrees. In addition, part of a roller retainer 19 is disposed adjacent each roller on a side opposite to the urging spring 18, specifically, on a side of the clockwise direction of the urging spring 18.

Referring to Fig. 5, the roller retainer 19 is rotatably driven through a slight angle relative to the slope forming member 15 when a retainer arm portion 19a protruding at one place on an outer periphery of the roller retainer 19 is driven forwardly and backwardly in the circumferential direction as a plunger 20a of a retainer control solenoid 20 advances and retracts. In the arrangement of this embodiment, the plunger 20a is moved rightwardly in Fig. 5 by an internal spring when an excitation coil of the retainer control solenoid 20 is not energized, which results in the roller retainer 19 being rotatably driven in the clockwise direction. When the excitation coil is energized, in contrast, the plunger 20a is moved leftwardly in Fig. 5 by electromagnetic attraction, so that the roller retainer 19 is rotatably driven in a counterclockwise direction.

The following describes, with reference to Figs. 6(a) and 6(b) how, through the above-described arrangements, the linear actuator can retain the current position in a stationary state relative to an external force even without the supply of the driving power through functioning of the one-way mechanism and, with reference to Figs. 7(a) and 7(b), how regeneration of the driving power is enabled by actively interrupting externally the function of the one-way mechanism and rotatably driving the rotational drive path with the external force.

Referring to Figs. 6(a) and 6(b), the plunger 20a is moved rightwardly in Fig. 6(a) by the internal spring with the excitation coil of the retainer control solenoid 20 not energized to thereby rotatably drive the roller retainer 19 in the clockwise direction. At this time, in Fig. 6(b), part of the roller retainer 19 adjacent the roller 17 is rotatably driven in a direction away from the roller 17 as shown at portion E in the figure, in which condition motion of the roller 17 is not inhibited. Consequently, each roller 17 is moved in the clockwise direction in Fig. 6(b) by the urging spring 18, so that each roller 17 is in contact with both the outer peripheral cylindrical surface 1b and the slope surface 15b to thereby establish a wedge engagement state.

If, at this time, the output shaft 1a attempts to rotate in the clockwise direction, a friction force between the outer peripheral cylindrical surface 1b and each roller 17 pulls each roller 17 in a direction of decreasing clearance to thereby create the wedge engagement state, so that the friction force as a result of a strong straining force thereof inhibits the output shaft 1a from rotating in the clockwise direction.

According to the general arrangement of the linear actuator of this embodiment, when the output shaft 1a rotates clockwise in Fig. 6(b), the screw shaft 4 rotates counterclockwise as viewed from an upward direction. In addition, in this embodiment, the screw shaft 4 has a righthand thread, so that the nut member 9 constrained from rotating with the counterclockwise rotation of the screw shaft is operatively associated with a downward linear motion of the linear motion output member 10. As a result, as the clockwise rotation of the output shaft 1a is inhibited by the wedge engagement as described above, the downward linear motion of the nut member 9 and the linear motion output member 10 are stopped. Specifically, when the excitation coil of the retainer control solenoid 20 is not energized, the linear motion output member 10 can be held at a position by using the wedge engagement without having to consuming the driving power, even if a downward external force acts on the linear motion output member 10.

When the output shaft 1a rotates counterclockwise in Fig. 6(b), the friction force between the outer peripheral cylindrical surface 1b and each roller 17 pushes each roller 17 in a direction of increasing clearance to thereby establish no wedge engagement state. Specifically, the output shaft 1a can freely rotate in the counterclockwise direction. Considering that the counterclockwise rotation of the output shaft 1a is operatively associated with the upward linear motion of the nut member 9 and the linear motion output member 10, the linear motion output member 10 can be linearly driven upwardly by counteracting the external force and using the motor 1 as the drive unit for rotation, when the excitation coil of the retainer control solenoid 20 is not energized.

To further describe the use of the wedge engagement for retaining the linear motion output member 10 at a position, the output shaft 1a as a member for stopping motion by wedge engagement is a rotary member. Generally, when rotary motion is to be translated to linear motion by using a screw mechanism, a large thrust force is generated in the linear motion member even with small torque of the rotary member. This means that the linear motion output member 10 on which a large external force acts can be held by making the output shaft 1a as the rotary member stationary with small torque. Accordingly, the stress generated at the wedge engagement portion can be made relatively small, so that a fatigue life can be extended.

The small gear 2 has the number of teeth smaller than that of the large gear 3. The output shaft 1a as the member of stopping motion by wedge engagement, therefore, has a high rotating speed and small torque acting thereon, as compared with the screw shaft 4 as a rotary member in the same rotational drive path. The output shaft 1a having a higher rotating speed among other rotary members is selected for stopping the motion by wedge engagement, which contributes to a smaller stress generated at the wedge engagement portion and a longer fatigue life.

Further, actual wedge engagement is made to act on the outer peripheral cylindrical surface 1b that has a larger diameter than that of a shaft portion of the output shaft 1a. This allows the straining force to be generated by the wedge engagement to be small even with the same retaining torque to be generated by the wedge engagement. This also contributes to a smaller stress generated at the wedge engagement portion and a longer fatigue life.

Finally, the slope forming member 15 is constrained in a non-rotatable state relative to the center housing 13; however, because of the Oldham ring 16, the slope forming member 15 is capable of translational motion in a plane perpendicular to the axis. Accordingly, if there is a difference in the straining force among the wedge engagement portions at three places in Fig. 6(b), three contacting forces acting as reaction forces of the straining forces on the slope forming member 15 do not balance with each other. The imbalance among the forces causes the slope forming member 15 to move translationally in the plane perpendicular to the axis. This evens out the straining forces of the wedge engagement portions at three places, so that a maximum value of the stress generated at the wedge engagement portions can be inhibited from becoming large. This also contributes to a longer fatigue life.

From a fail-safe standpoint, when the excitation coil of the retainer control solenoid 20 is not energized as shown in Figs. 6(a) and 6(b), the linear motion output member 10 is prevented from moving downwardly to maintain the current position. This reliably prevents the linear motion output member 10 that may support a large external force or a heavy article from lowering uncontrollably when a power supply is shut down. Specifically, this achieves a fail-safe.

Referring to Figs. 7(a) and 7(b), the excitation coil of the retainer control solenoid 20 is energized and the plunger 20a is moved leftwardly in Fig. 7(a) by magnetic attraction to thereby rotatably drive the roller retainer 19 in the counterclockwise direction. At this time, in Fig. 7(b), part of the roller retainer 19 adjacent each roller 17 contacts each roller 17 as shown at portion F in the figure, pushing the roller 17 in the counterclockwise direction in which a radial clearance increases. As a result, each roller 17 is no longer able to establish the wedge engagement in a position of being sandwiched between the outer peripheral cylindrical surface 1b and the slope surface 15b. At this time, the roller retainer 19 hampers the output shaft 1a from rotating in the clockwise direction to thereby let the friction force between the outer peripheral cylindrical surface 1b and each roller 17 pull each roller 17 in the direction of decreasing clearance. As a result, the output shaft 1a can freely rotate in the clockwise direction without being hampered by the wedge engagement.

As described earlier, the clockwise rotation of the output shaft 1a in Fig. 7(b) and the downward motion of the linear motion output member 10 are operatively associated with each other. Thus, as long as the condition of Figs. 7(a) and 7(b) is maintained by energization of the excitation coil of the retainer control solenoid 20, an external force may be used to drive the linear motion output member 10 downwardly to thereby rotatably drive the rotational drive path in reverse, so that the motor 1 as the drive unit for rotation can be driven as a generator for regeneration of the driving power.

The embodiment incorporates the screw mechanism offering small friction resistance through rolling contact as the rotary motion-to-linear motion conversion mechanism. The embodiment achieves a high backward efficiency in the rotary motion-to-linear motion conversion mechanism even during the regeneration of the driving power, offering a high driving power regeneration efficiency.

When the excitation coil of the retainer control solenoid 20 is energized to change the condition of Figs. 6(a) and 6(b) to that of Figs. 7(a) and 7(b), each roller 17 which is clamped between the outer peripheral cylindrical surface 1b and the slope surface 15b and on which the straining force acts must be pushed out by the roller retainer 19 by using the magnetic attraction of the retainer control solenoid 20 as a driving power.

Because of concern that the roller 17 will not be pushed out due to friction resistance operatively associated with a magnitude of the straining force, following steps, for example, are recommended to switch to a driving power regeneration mode.

Specifically, the motor 1 is made to function as its primary function as the drive unit for rotation to thereby make rotation drive torque in the counterclockwise direction act on the output shaft 1a of Fig. 6(b). This torque is used to offset torque that is generated by an external force to rotatably drive the output shaft 1a in the clockwise direction. The straining force and the friction resistance acting on each roller 17 of Fig. 6(b) are thereby decreased. The excitation coil of the retainer control solenoid 20 is energized when the rotation drive torque of the motor 1 grows sufficiently large and the abovementioned friction resistance is sufficiently small or zero. When the friction resistance is eliminated by the straining force acting on each roller 17, substantially only an urging force of the urging spring 18 is required to push out the roller 17. The roller 17 is therefore pushed out by the roller retainer 19 by using the magnetic attraction of the retainer control solenoid 20 as a driving power. The rotation drive torque of the motor 1 is thereafter reduced and the output shaft 1a starts rotating backward with the driving torque of the external force, so that the regeneration of the driving power is started.

Should a power supply fail during the abovementioned steps, the condition of Fig. 6(b) is invariably recovered to stop the downward motion of the linear motion output member 10, so that a fail-safe property is maintained.

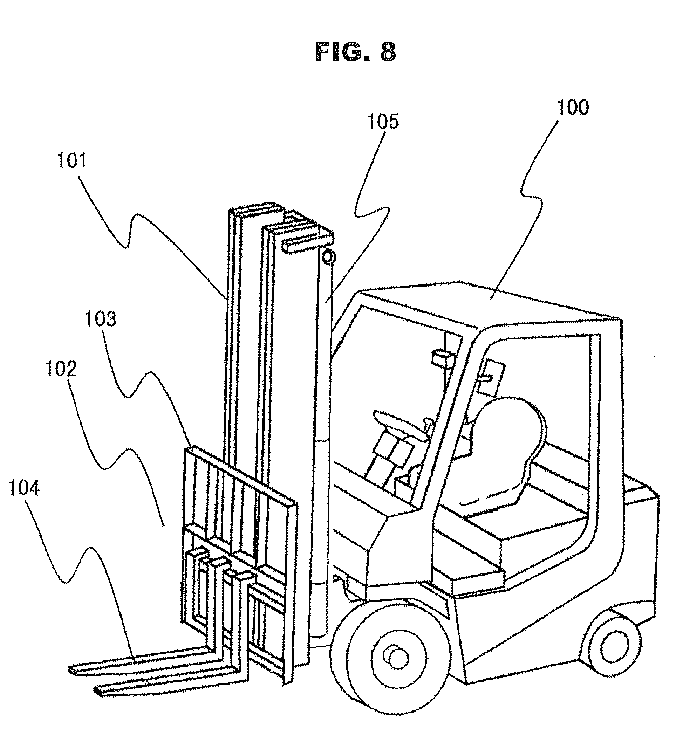

An applied example to which the linear actuator according to the embodiment described heretofore is applied will be described below. Fig. 8 is a drawing illustrating a forklift truck as a piece of work equipment for carrying loads, to which the linear actuator is applied. A main unit 100 of the forklift truck is mounted with a mast 101. The mast 101 is attached with a load lift section 102. The load lift section 102 includes a retaining frame 103 that is vertically movably attached to an inner frame of the mast 5 via a lift bracket (not shown), and a pair of forks 104 that is mounted on the retaining frame 103. A linear actuator 105 described in the abovementioned embodiment may be disposed, for example, on the side of an operator seat of the mast 101.

When the load lift section 102 is raised and stopped at a position, the linear actuator 105 requires no driving power whatsoever for maintaining that vertical position. During lowering, the driving torque of the external force causes an internal output shaft to rotate backward for regeneration of the driving power as described above.

Consequently, the forklift truck having the linear actuator of this embodiment can achieve an electric forklift truck that requires no energy for retaining a load raised and stopped at a specific elevated position and is capable of effectively recovering energy when the load raised and held at the specific elevated position is lowered.

### Description of the Reference Numerals

- 1:: Motor
- 1a:: Output shaft
- 1b:: Outer peripheral cylindrical surface
- 2:: Small gear
- 3:: Large gear
- 4:: Screw shaft
- 5, 6:: Radial bearing
- 7:: Thrust bearing
- 8:: Lower housing
- 9:: Nut member
- 10, 11:: Linear motion output member
- 12:: Connecting member
- 13:: Center housing
- 13a, 15a:: Keyway
- 14:: Upper housing
- 14a:: Inner peripheral surface
- 15:: Slope forming member
- 15b:: Slope surface
- 16:: Oldham ring
- 16a, 16b:: Key
- 17:: Roller
- 18:: Urging spring
- 19:: Roller retainer
- 19a:: Retainer arm portion
- 20:: Retainer control solenoid
- 20a:: Plunger

## Claims

1. A linear actuator including a rotary member in a rotational drive path, a drive unit for rotatably driving the rotary member, a linear motion member and a rotary motion-to-linear motion conversion mechanism for converting rotary motion of the rotary member to linear motion of the linear motion member, thereby allowing the linear motion to perform work relative to externals, the linear actuator comprising:
a one-way mechanism for allowing the rotary member in the rotational drive path to rotate in a rotating driving direction relative to a non-rotary member and inhibiting, by wedge engagement, the rotary member from rotating in a direction opposite to the rotating driving direction,
wherein: the one-way mechanism has a function of switching to a state in which the rotary member is allowed to rotate also in the opposite direction.

2. The linear actuator according to claim 1,
wherein: the one-way mechanism comprises:
an outer peripheral surface of one of the rotary member and the non-rotary member;
an inner peripheral surface of the other of the rotary member and the non-rotary member, the outer peripheral surface and the inner peripheral surface forming a clearance distribution therebetween, the clearance distribution decreasing toward one side in a circumferential direction;
a wedge member in a form of a rolling element disposed in the clearance;
elastic means for urging the wedge member in the form of the rolling element in a direction of decreasing clearance;
a retaining member disposed circumferentially adjacent the wedge member; and
drive means for driving the retaining member circumferentially by an external command, the wedge member being pushed out by the retaining member in a direction opposite to an urging direction of the elastic means to inhibit wedge engagement, thereby allowing the one-way mechanism to establish a state in which the rotary member is allowed to rotate in the direction opposite to the rotating driving direction.

3. The linear actuator according to claim 1 or 2,
wherein: the one-way mechanism establishes a state in which, when a driving power is not actively and externally supplied, the rotary member is inhibited from rotating in the direction opposite to the rotating driving direction relative to the non-rotary member and, when the driving power is actively and externally supplied, the rotary member is allowed to rotate also in the opposite direction.

4. The linear actuator according to claim 1,
wherein: at least part of external work done by the linear motion of the linear motion member is energy stored in a form, for example, of positional energy or elastic energy;
the rotary motion-to-linear motion conversion mechanism comprises a screw member having helical grooves and ridges, and a nut member connected to the screw member through a screw pair, the screw member and the nut member making a rolling contact; and
the one-way mechanism allows the rotary member to rotate in the opposite direction for regeneration of driving power.

5. The linear actuator according to any one of claims 2 to 4,
wherein: the rotary member that is inhibited from rotating by the one-way mechanism through wedge engagement includes a portion having a diameter larger than those of other parts;
the clearance distribution decreasing toward one side in the circumferential direction is formed between the portion and the non-rotary member; and
the wedge member in the form of the rolling element is disposed in the clearance and urged by the elastic means in the direction of decreasing the clearance.

6. The linear actuator according to any one of claims 2 to 4,
wherein: the rotary member that is inhibited from rotating by the one-way mechanism through wedge engagement has the highest rotating speed (angular velocity) in the rotational drive path.

7. The linear actuator according to claim 2, further comprising:
a plurality of wedge engagement mechanisms having the wedge members in the form of the rolling elements, disposed in the circumferential direction, wherein:
the plurality of wedge engagement mechanisms is capable of translational motion in a plane perpendicular to an axis of the non-rotary member in the one-way mechanism, but constrained from rotation about the axis.

8. The linear actuator according to claim 4,
wherein: when the one-way mechanism allows the rotary member to rotate in the opposite direction for regeneration of driving power, a state is temporarily established in which the drive unit generates rotation drive torque, the state is then switched to one in which the one-way mechanism allows the rotary member to rotate in the opposite direction, and the rotation drive torque of the drive unit is thereafter reduced to start the regeneration of the driving power.

9. A work machine having a vehicle main unit and a mast attached with a load lift section, comprising:
a linear actuator for raising and lowering the load lift section; and
a drive unit for rotation for driving the linear actuator,
wherein: the linear actuator includes:
a rotary motion-to-linear motion conversion mechanism for converting rotary motion of a rotary member that is rotatably driven by the drive unit for rotation to linear motion; and
a one-way mechanism for allowing the rotary member to rotate in a rotating driving direction relative to a non-rotary member and inhibiting, by wedge engagement, the rotary member from rotating in a direction opposite to the rotating driving direction; and
the one-way mechanism has a function of switching to a state in which the rotary member is allowed to rotate also in the opposite direction.
